# EUROPÄISCHE PATENTSCHRIFT

(11) **EP 3 512 755 B1**
(45) Veröffentlichungstag und Bekanntmachung des Hinweises auf die Patenterteilung: **06.01.2021**
(21) Anmeldenummer: 17758796.1
(22) Anmeldetag: 17.08.2017
(51) Int. Cl.: B62D 5/065, B62D 15/02, B60W 20/10, B62D 6/00

(54) **VERFAHREN ZUM STEUERN EINES HYDRAULISCHEN SERVO-LENKSYSTEMS SOWIE EIN HYDRAULISCHES SERVO-LENKSYSTEM IN EINEM FAHRZEUG**
METHOD FOR CONTROLLING A HYDRAULIC SERVO STEERING SYSTEM, AND A HYDRAULIC SERVO STEERING SYSTEM IN A VEHICLE
PROCÉDÉ DE COMMANDE D'UN SYSTÈME DE DIRECTION ASSISTÉE HYDRAULIQUE AINSI QUE SYSTÈME DE DIRECTION ASSISTÉE HYDRAULIQUE DANS UN VÉHICULE

(30) Priorität: 15.09.2016 DE 102016011093
(43) Veröffentlichungstag der Anmeldung: 24.07.2019
(73) Patentinhaber: WABCO Europe BVBA, 1170 Brussels (BE)
(72) Erfinder: HANSLIK, Daniel, 30916 Isernhagen (DE); KALLENBACH, Stephan, 30161 Hannover (DE)
(74) Vertreter: Rabe, Dirk-Heinrich
(86) Internationale Anmeldenummer: PCT/EP2017/000993
(87) Internationale Veröffentlichungsnummer: WO 2018/050268

(56) Entgegenhaltungen:
- DE-A1-102005 038 985
- DE-A1-102010 023 735
- DE-B4- 19 635 009

## Beschreibung

Die Erfindung betrifft ein Verfahren zum Steuern eines hydraulischen Servo-Lenksystems sowie ein hydraulisches Servo-Lenksystem in einem Fahrzeug, insbesondere Nutzfahrzeug.

In Fahrzeugen, insbesondere Nutzfahrzeugen, wird zum Unterstützen einer Lenkanforderung, die durch einen Fahrer oder ein automatisiertes Lenksystem vorgegeben wird, ein Servo-Lenksystem vorgesehen. Dieses weist eine Hydraulikpumpe auf, die über eine Hydraulikleitung mit einem beliebigen Lenkgetriebe verbunden ist. Das Lenkgetriebe setzt die Lenkanforderung mechanisch in eine Lenkbewegung von Rädern des Fahrzeuges um.

Zur Unterstützung der Lenkung wird durch die Hydraulikpumpe eine Hydraulikflüssigkeit bereitgestellt, die zu dem Lenkgetriebe gefördert wird. Die Hydraulikpumpe wird hierbei von einem Motor versorgt, dessen Leistung bzw. dessen Motordrehzahl ein Ist-Volumenstrom der Hydraulikflüssigkeit bestimmt, da in Abhängigkeit der Motordrehzahl eine Pumpendrehzahl eingestellt wird, die zu einem bestimmten Ist-Volumenstrom führt. Die Hydraulikflüssigkeit im Lenkgetriebe wirkt derartig, dass die mechanische Umsetzung der Lenkanforderung in eine Lenkbewegung unterstützt wird, wobei die Lenk-Unterstützung derartig erfolgt, dass bei höherem bereitgestellten Ist-Volumenstrom eine höhere Lenkgeschwindigkeit erreicht werden kann.

In DE 10 2015 014 882 A1 ist ein Servo-Lenksystem beschrieben, dessen Hydraulikpumpe von einem Motor betrieben wird, wobei die Hydraulikpumpe angesteuert wird, wenn eine Lenkanforderung festgestellt wurde. Die Leistung des Motors bestimmt hierbei den Ist-Volumenstrom der Hydraulikflüssigkeit, so dass je nach Höhe der Lenkanforderung ein ausreichender Ist-Volumenstrom durch entsprechende Einstellung der Motordrehzahl bereitgestellt werden kann. Unterstützend kann auch ein automatisiertes Lenksystem über einen Motor auf eine Lenkstrebe einwirken, so dass auch eine automatisierte Lenkung ermöglicht wird. Bei einem Ausfall des Motors kann die Hydraulikpumpe von einem Anlassermotor betrieben werden, so dass die Hydraulikpumpe wieder mit einem gewissen Ist-Volumenstrom fördern kann, so dass auch bei einem Motorausfall eine akzeptable Funktion des hydraulischen Servo-Lenksystems gewährleistet werden kann.

In JP2007269312A2 ein rein elektronisches Servo-Lenksystem beschrieben, das über einen Elektromotor die Lenkung unterstützen kann. Die Höhe der Lenk-Unterstützung wird hierbei in Abhängigkeit einer Umgebungserfassung eingestellt, indem geprüft wird, ob anhand der aktuellen Umgebung des Fahrzeuges eine Lenk-Unterstützung erforderlich ist oder nicht.

In DE 10 2007 016 112 ist eine hydraulische Lenk- und Brems-Unterstützung gezeigt. Demnach ist vorgesehen, geschwindigkeitsabhängig eine Pumpendrehzahl der Hydraulikpumpe einzustellen, wobei die Hydraulikpumpe von einem Motor angetrieben wird. Die Ansteuerung der Hydraulikpumpe erfolgt hierbei sobald eine Lenkung erkannt wurde, wobei die Art der Ansteuerung davon abhängig ist, wie hoch der geschwindigkeitsabhängige Bedarf ist, d.h. welcher Ist-Volumenstrom tatsächlich nötig ist. Dadurch soll erreicht werden, bei Bedarf eine ausreichende Lenk- und Brems-Unterstützung bereitzustellen und gleichzeitig bei Nicht-Bedarf die Nutzung von überschüssiger Energie zu reduzieren.

Die DE 10 2005 038 985 A1 offenbart ein hydraulisches Lenkhilfesystem für Kraftfahrzeuge mit einer Lenkhilfepumpe und mit einem veränderbaren Übersetzungsgetriebe, insbesondere einem Hochtrieb für die Lenkhilfspumpe.

Es ist Aufgabe der Erfindung, ein Verfahren zum Steuern eines hydraulischen Servo-Lenksystems anzugeben, mit dem bei einer drohenden Kollision eine zuverlässige Lenk-Unterstützung mit hoher Lenkgeschwindigkeit gewährleistet werden kann. Weiterhin ist Aufgabe der Erfindung, ein hydraulisches Servo-Lenksystem bereitzustellen.

Diese Aufgabe wird durch ein Verfahren nach Anspruch 1 sowie ein hydraulisches Servo-Lenksystem nach Anspruch 15 gelöst. Bevorzugte Weiterbildungen sind in den Unteransprüchen angegeben.

Erfindungsgemäß ist dazu vorgesehen, nach dem Feststellen einer drohenden Kollision des eigenen Fahrzeuges mit einem Kollisionsobjekt zu prüfen, ob eine von einer Hydraulikpumpe eines Servo-Lenksystems des Fahrzeuges bereitgestellte, der Lenk-Unterstützung dienende Hydraulikflüssigkeit einen Ist-Volumenstrom aufweist, der größer oder gleich einem Mindest-Volumenstrom ist. Ist dies nicht der Fall, wird erfindungsgemäß eine Pumpendrehzahl der Hydraulikpumpe erhöht.

Dies erfolgt vorzugsweise durch Erhöhen einer Motordrehzahl eines Antriebsmotors des Fahrzeuges, beispielsweise eines Verbrennungsmotors oder einem elektrisch betriebenen Motor, der mechanisch mit der Hydraulikpumpe des Servo-Lenksystems in Wirkverbindung steht. Eine Erhöhung der Motordrehzahl des Antriebsmotors hat demnach auch unmittelbar eine Erhöhung der Pumpendrehzahl der Hydraulikpumpe zur Folge, wodurch wiederum der bereitgestellte Ist-Volumenstrom ansteigt.

Vorteilhafterweise kann somit durch eine Erhöhung der Motordrehzahl des Antriebsmotors des Fahrzeuges der bereitgestellte Ist-Volumenstrom zumindest bis auf den Mindest-Volumenstrom erhöht werden. Alternativ oder ergänzend kann auch eine Pumpen-Übersetzung, die die Übersetzung zwischen dem Antriebsmotor und der Hydraulikpumpe einstellt, verändert werden, beispielsweise über ein zwischen dem Antriebsmotor und der Hydraulikpumpe angeordnetes Pumpengetriebe. Dadurch kann bei gleichbleibender oder nur gering erhöhter Motordrehzahl eine stärkere Erhöhung der Pumpendrehzahl und somit des Ist-Volumenstromes erreicht werden.

Der Mindest-Volumenstrom ist hierbei derartig gewählt, dass eine Lenkung mit zumindest einem maximalen Lenkwinkel, um bei einer Kollision durch ein Ausweichen die Unfallfolgen zu mindern, mit einer ausreichend hohen Lenkgeschwindigkeit, z.B. 400-500° Lenkradwinkel pro Sekunde, unterstützt werden kann.

Da diese Erhöhung an das Feststellen einer drohenden Kollision gekoppelt ist, wird vorteilhafterweise bereits dann ein erhöhter Ist-Volumenstrom bereitgestellt, wenn infolge der erkannten Kollision noch keine Lenkanforderung vorliegt und somit noch nicht feststeht, ob das Fahrzeug überhaupt eine Lenkung vollziehen soll. Die Erhöhung des Ist-Volumenstromes ist somit nicht an eine Lenkanforderung gekoppelt. Somit kann bereits vorbereitend für den Fall, dass der Fahrer oder ein automatisiertes Lenksystem infolge der drohenden Kollision eingreift, ein ausreichender Ist-Volumenstrom bereitgestellt werden und nicht erst dann wenn tatsächlich eine Lenkanforderung vorliegt.

Im Rahmen der Erfindung wird als Antriebsmotor des Fahrzeuges, z.B. ein Verbrennungsmotor oder ein elektrisch betriebener Motor, der Antrieb des Fahrzeuges verstanden, d.h. der Antriebsmotor gibt eine Motordrehzahl vor, die über ein Fahrzeugschaltgetriebe, z.B. ein automatisiertes Getriebe (AMT) oder ein automatisches Getriebe (AT), mit dem eine Motor-Übersetzung eingestellt werden kann, auf eine Antriebswelle eines Antriebsstrangs des Fahrzeuges übertragen wird. Über die Antriebswelle werden Räder des Fahrzeuges angetrieben, beispielsweise die Räder einer Hinterachse oder mehrerer Hinterachsen des Fahrzeuges. Somit wird sowohl eine Fahrzeuggeschwindigkeit des Fahrzeuges als auch eine Pumpendrehzahl der Hydraulikpumpe in Abhängigkeit der Motordrehzahl des Antriebsmotors eingestellt.

Eine Abkopplung der Hydraulikpumpe von dem Antriebsmotor ist hierbei vorzugsweise nicht vorgesehen, d.h. sobald der Antriebsmotor mit der Motordrehzahl angetrieben wird, wird durch die mechanische Verbindung zur Hydraulikpumpe automatisch auch die Hydraulikpumpe mit einer bestimmten Pumpendrehzahl angetrieben.

Vorzugsweise wird zum Prüfen, ob der Ist-Volumenstrom größer oder gleich dem Mindest-Volumenstrom ist, und somit ein ausreichender Ist-Volumenstrom für eine Lenk-Unterstützung bei einer drohenden Kollision bereitgestellt wird, durch Bewertung der Motordrehzahl des Antriebsmotors ermittelt. Dies ist möglich, da diese unmittelbar zusammenhängen.

Demnach wird die Motordrehzahl beispielsweise zunächst über ein von einer Motor-Steuereinrichtung des Antriebsmotors übermitteltes Motor-Ausgangssignal ermittelt, wobei die Motor-Steuereinrichtung die Motordrehzahl selbst misst. Alternativ oder ergänzend kann die Motordrehzahl aber auch aus einer aktuellen Fahrzeug-Geschwindigkeit unter Berücksichtigung der Motor-Übersetzung des zwischen dem Antriebsmotor und der Antriebswelle des Fahrzeuges angeordneten Fahrzeugschaltgetriebes ermittelt werden, ist. in dem Fahrzeugschaltgetriebe ein bestimmter Fahrzeuggetriebe-Gang eingelegt ist.

Die Motor-Übersetzung kann für den eingelegten Fahrzeuggetriebe-Gang beispielsweise auf einer Getriebe-Steuereinrichtung gespeichert sein oder während der Fahrt ermittelt werden, indem aus der Motordrehzahl und einer auf die Antriebswelle übertragenen Getriebeausgangsdrehzahl eine Motor-Übersetzung für den entsprechenden Fahrzeuggetriebe-Gang geschätzt bzw. berechnet wird.

Aus der Motordrehzahl wird der Ist-Volumenstrom vorteilhafterweise ermittelt, indem die Pumpendrehzahl der Hydraulikpumpe bestimmt wird, die aufgrund der mechanischen Verbindung zwischen Antriebsmotor und Hydraulikpumpe, beispielsweise Zahnräder oder Riemen, unmittelbar aus der Motordrehzahl folgt. Falls vorhanden, ist die Pumpen-Übersetzung des zwischen dem Antriebsmotor und der Hydraulikpumpe angeordneten Pumpengetriebes zu berücksichtigen. Aus der Pumpendrehzahl folgt dann über eine der Hydraulikpumpe zugeordneten Pumpenkennlinie der Ist-Volumenstrom.

Alternativ kann auch direkt der Ist-Volumenstrom in einer von der Hydraulikpumpe zu einem Lenkgetriebe führenden Hydraulikleitung gemessen werden, in der die Hydraulikflüssigkeit an das Lenkgetriebe gefördert wird, um das Lenkgetriebe bei der mechanischen Umsetzung der Lenkanforderung in eine Lenkbewegung zu unterstützen.

Gemäß einer vorteilhaften Ausführung ist vorgesehen, zum Erhöhen der Motordrehzahl des Antriebsmotors, falls der Ist-Volumenstrom kleiner als der Mindest-Volumenstrom ist und eine drohende Kollision festgestellt wurde, zunächst zu prüfen, ob durch das Fahrzeugschaltgetriebe ein bestimmter Fahrzeuggetriebe-Gang eingelegt ist oder das Fahrzeugschaltgetriebe ausgekuppelt ist, d.h. ein Leerlauf eingestellt ist. Dies kann beispielsweise erfolgen, indem ein von der Getriebe-Steuereinrichtung des Fahrzeugschaltgetriebes ausgegebenes Getriebe-Ausgangssignal bewertet wird, das angibt, welcher Fahrzeuggetriebe-Gang eingelegt ist oder ob sich das Fahrzeugschaltgetriebe im Leerlauf befindet.

Befindet sind das Fahrzeugschaltgetriebe im Leerlauf, kann die Motordrehzahl lediglich durch ein direktes Ansteuern des Antriebsmotors erhöht werden. Dazu wird vorzugsweise ein Motor-Steuersignal an eine Motor-Steuereinrichtung des Antriebsmotors ausgegeben, aufgrund dessen eine Erhöhung der Motordrehzahl erfolgt, wobei die Motordrehzahl so lange erhöht wird bis der Ist-Volumenstrom größer oder gleich dem Mindest-Volumenstrom ist. Dies wird erneut über die Pumpenkennlinie unter Kenntnis der Pumpendrehzahl festgestellt, die durch die Erhöhung der Motordrehzahl ebenfalls erhöht wird.

Wird festgestellt, dass durch das Fahrzeugschaltgetriebe ein bestimmter Fahrzeuggetriebe-Gang eingelegt ist und somit eine bestimmte Motor-Übersetzung vorliegt, wird ein Getriebe-Steuersignal an die Getriebe-Steuereinrichtung des Fahrzeugschaltgetriebes ausgegeben, aufgrund dessen der eingestellte Fahrzeuggetriebe-Gang verringert wird. Aufgrund des Verringerns des eingestellten Fahrzeuggetriebe-Gang wird gleichzeitig die Motordrehzahl erhöht, da sich durch den geringeren Fahrzeuggetriebe-Gang die Motor-Übersetzung verändert. Hierbei wird der Fahrzeuggetriebe-Gang so stark verringert, bis sich eine Motordrehzahl ergibt, die zu einem Ist-Volumenstrom führt, der größer oder gleich dem Mindest-Volumenstrom ist. Unter Kenntnis der Motor-Übersetzung kann vorteilhafterweise sofort der richtige Fahrzeuggetriebe-Gang eingestellt werden, ohne zwischenzuschalten.

Ergänzend zum Erhöhen der Motordrehzahl im Leerlauf oder ergänzend oder alternativ zum Verringern des Fahrzeuggetriebe-Ganges kann vorgesehen sein, die Pumpen-Übersetzung des Pumpengetriebes zu verändern, um die Pumpendrehzahl und somit den Ist-Volumenstrom zu erhöhen. D.h. durch Einstellen eines geeigneten Pumpengetriebe-Ganges im Pumpengetriebe kann auch bei niedrigen Motordrehzahlen, z.B. bei hohen FahrzeugGeschwindigkeiten auf der Autobahn, bei wenig Lenkbewegungen und insbesondere um Kraftstoff zu sparen, durch Verringern des Pumpengetriebe-Ganges nach Feststellen einer drohenden Kollision die Pumpendrehzahl und somit der Ist-Volumenstrom erhöht werden. Dadurch kann vorteilhafterweise ein Verändern des Fahrzeuggetriebe-Ganges unterbleiben bzw. in geringerem Maße erfolgen und auch ein direktes Erhöhen der Motordrehzahl im Leerlauf geringer ausfallen.

Somit kann entweder durch ein Verändern des Fahrzeuggetriebe-Ganges oder durch eine direkte Anforderung zum Erhöhen der Motordrehzahl, wenn der Leerlauf eingelegt ist, und/oder durch Verändern des Pumpengetriebe-Ganges die Pumpendrehzahl und somit der Ist-Volumenstrom angehoben werden. Dies hat keine unmittelbaren Auswirkungen auf das Fahrverhalten, da im Leerlauf lediglich die Motordrehzahl verändert wird und bei eingelegtem Fahrzeuggetriebe-Gang, d.h. wenn das Fahrzeug angetrieben wird, lediglich die Motor-Übersetzung geändert wird, was aber keine wesentlichen Auswirkungen auf die aktuelle Fahrzeug-Geschwindigkeit hat. Eine Veränderung des Pumpengetriebe-Ganges hat ebenfalls keine Auswirkungen auf den Fahrbetrieb.

Zum Feststellen einer drohenden Kollision kann beispielsweise ein Notbremssystem (AEBS) im Fahrzeug vorhanden sein, das über eine Notbrems-Steuereinrichtung eine Umfeld-Überwachung und Bewertung durchführt und dadurch eine drohende Kollision mit einem Kollisionsobjekt erkennen kann. In Abhängigkeit davon kann ein Kollisions-Warnsignal ausgegeben werden, beispielsweise über eine Datenbusverbindung im Fahrzeug, z.B. über einen CAN-Bus, Flexray, Ethernet, etc., das die Prüfung startet, ob der Ist-Volumenstrom für eine Lenk-Unterstützung ausreichend ist.

Insgesamt werden die Signale zumindest von und zur Motor-Steuereinrichtung, Getriebe-Steuereinrichtung, Notbrems-Steuereinrichtung und zum Pumpengetriebe über die Datenbusverbindung übertragen, um eine Übertragung von Signalen zu einer Servo-Steuereinrichtung, durch die das Einstellen des Ist-Volumenstromes bei einer drohenden Kollision durch Erhöhen der Motordrehzahl bzw. der Pumpendrehzahl gesteuert wird, erleichtert und beschleunigt werden kann. Dadurch kann bei vorliegendem Kollisions-Warnsignal schnell eine Erhöhung des Ist-Volumenstromes angefordert werden, so dass auch bei unmittelbarem Eingriff in die Lenkung aufgrund der drohenden Kollision eine ausreichende Lenk-Unterstützung sichergestellt werden kann.

Die Lenkanforderung, die bei einer drohenden Kollision unterstützt werden soll, kann beispielsweise manuell vom Fahrer über ein Lenkrad vorgegeben werden oder aber von einem automatisierten Lenksystem, das beispielsweise über einen Elektromotor eine Lenkung anfordert, wenn eine drohende Kollision erkannt wurde. In beiden Fällen wird eine - manuell vom Fahrer oder automatisiert vom Elektromotor - vorgegebene Lenkanforderung mechanisch auf das Lenkgetriebe übertragen und dieses hydraulisch durch die Servolenkung unterstützt.

Die Erfindung wird im Folgenden anhand der beiliegenden Zeichnung erläutert. Es zeigen:
- Fig. 1: eine schematische Ansicht eines Fahrzeuges mit einem hydraulischen Servo-Lenksystem; und
- Fig. 2: ein Flussdiagramm zur Durchführung des erfindungsgemäßen Verfahrens.

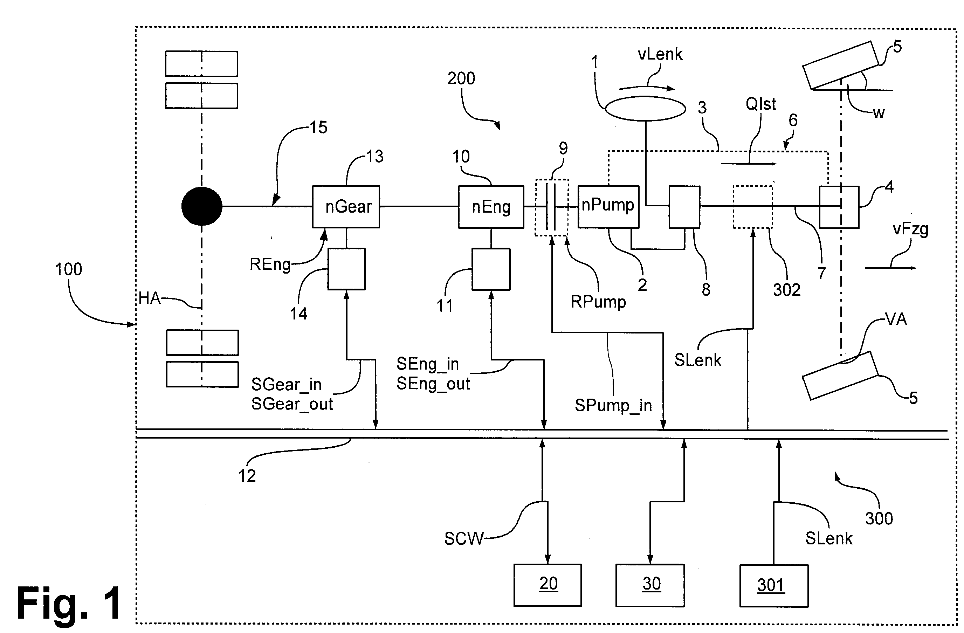

In der Ausführungsform gemäß Fig. 1 ist schematisch ein Fahrzeug 100 gezeigt, das ein hydraulisches Servo-Lenksystem 200 aufweist, wobei das hydraulische Servo-Lenksystem 200 optional durch ein automatisiertes Lenksystem 300 elektrisch unterstützt werden kann. Das hydraulische Servo-Lenksystem 200 dient als Lenk-Unterstützung sobald eine Lenkanforderung ALenk durch einen Fahrer oder durch das optionale automatisierte Lenksystem 300 vorliegt, wobei die Lenk-Unterstützung bewirkt, dass eine höhere Lenkgeschwindigkeit vLenk bei vorgegebener Lenkanforderung ALenk, beispielsweise durch Drehen eines Lenkrades 1, erreicht werden kann.

Das hydraulische Servo-Lenksystem 200 weist dazu eine Hydraulikpumpe 2 auf, die über eine Hydraulikleitung 3 mit einem Lenkgetriebe 4 strömungsverbunden ist. Wird die Hydraulikpumpe 2 angetrieben, kann von der Hydraulikpumpe 2 eine Hydraulikflüssigkeit 6 mit einem bestimmten Ist-Volumenstrom QIst bereitgestellt werden, wobei der Ist-Volumenstrom QIst insbesondere von einer Pumpendrehzahl nPump abhängig ist, mit der sich die Hydraulikpumpe 2 dreht. Die Hydraulikflüssigkeit 6 wird an das Lenkgetriebe 4 gefördert, wobei das Lenkgetriebe 4 die Lenkanforderung ALenk mechanisch in eine Lenkbewegung von Rädern 5 einer Vorderachse VA des Fahrzeuges 100 umsetzt. Durch die Hydraulikflüssigkeit 6 kann die mechanische Umsetzung der Lenkanforderung ALenk in die Lenkbewegung in geeigneter Weise je nach Ist-Volumenstrom QIst unterstützt werden, so dass eine Lenk-Unterstützung gewährleistet werden kann, die bei höheren Ist-Volumenströmen Qlst eine höhere Lenkgeschwindigkeit vLenk gewährleisten kann.

Die Lenkanforderung ALenk kann entweder durch den Fahrer durch Drehen des Lenkrades 1 oder aber durch das automatisierte Lenksystem 300 vorgegeben werden, das insbesondere durch eine Lenk-Steuereinrichtung (EMA-ECU) 301 sowie einen Elektromotor 302 ausgebildet wird. Die Lenk-Steuereinrichtung 301 ist ausgebildet, das Fahrzeug 100, insbesondere bei einer drohenden Kollision, automatisiert zu lenken und dazu den Elektromotor 302 über ein Lenksignal SLenk automatisiert anzusteuern. Der Elektromotor 302 wirkt dann in beliebiger Weise - unterstützt vom Servo-Lenksystem 200 - auf das Lenkgetriebe 4 ein, um eine Lenkbewegung der Räder 5 zu bewirken. Bei einer manuellen Drehung des Lenkrades 1 durch den Fahrer wird beispielsweise eine Lenkstrebe 7, die mit dem Lenkgetriebe 4 in Wirkverbindung steht, in eine Drehung versetzt.

Zur Lenk-Unterstützung kann die Hydraulikpumpe 2 mit einem geeigneten Lenksensor 8 in Wirkverbindung stehen, so dass über den Lenksensor 8 festgestellt werden kann, ob eine Verdrehung der Lenkstrebe 7 vorliegt und somit eine Lenkung um einen bestimmten Lenkwinkel w angefordert wurde.

Die Hydraulikpumpe 2 ist gemäß dem Ausführungsbeispiel in Fig. 1 über ein optionales Pumpengetriebe 9 mit einem Antriebsmotor 10 des Fahrzeuges 100, beispielsweise einem Verbrennungsmotor oder einem elektrisch betriebenen Motor, mechanisch verbunden, beispielsweise über einen Zahnriemen oder ein Zahnrad. Dadurch wird eine Drehung des Antriebsmotors 10 mit einer Motordrehzahl nEng automatisch auch auf die Hydraulikpumpe 2 übertragen, so dass die Pumpendrehzahl nPump der Hydraulikpumpe 2 abhängig von der Motordrehzahl nEng des Antriebsmotors 10 ist. D.h. sobald der Antriebsmotor 10 angetrieben wird, fängt auch die Hydraulikpumpe 2 automatisch an zu laufen. Demnach ist auch der Ist-Volumenstrom QIst abhängig von der Motordrehzahl nEng des Antriebsmotors 10.

Über das Pumpengetriebe 9 kann optional eine Pumpen-Übersetzung RPump eingestellt werden, wobei die Pumpen-Übersetzung RPump durch Einstellen eines Pumpengetriebe-Ganges PG auch geändert werden kann. Dadurch kann auch bei niedrigen Motordrehzahlen nEng eine hohe Pumpendrehzahl nPump eingestellt werden. Der Pumpengetriebe-Gang PG kann hierbei in Abhängigkeit eines Pumpen-Steuersignal SPump_in eingestellt werden.

Der Antriebsmotor 10 wird von einer Motor-Steuereinrichtung 11 gesteuert, die ausgebildet ist, die Motordrehzahl nEng einzustellen, wobei der Motor-Steuereinrichtung 11 dazu ein Motor-Steuersignal SEng_in vorgegeben werden kann, beispielsweise über eine Datenbusverbindung 12 des Fahrzeuges 100, beispielsweise einen CAN-Bus. Weiterhin kann die Motor-Steuereinrichtung 11 die aktuelle Motordrehzahl nEng über ein Motor-Ausgangssignal SEng_out ausgeben, beispielsweise ebenfalls an die Datenbusverbindung 12.

Der Antriebsmotor 10 ist weiterhin über ein Fahrzeugschaltgetriebe 13 mit einer zu einer Hinterachse HA des Fahrzeuges 100 führenden Antriebswelle 15 verbunden, so dass über das Fahrzeugschaltgetriebe 13 in Abhängigkeit einer eingestellten Motor-Übersetzung REng die Räder 5 der Hinterachse HA mit einer Getriebeausgangsdrehzahl nGear angetrieben werden können. Das Fahrzeugschaltgetriebe 13 ist beispielsweise als ein automatisiert gesteuertes Getriebe (AMT) oder als ein automatisches Getriebe (AT) ausgeführt, die jeweils über eine Getriebe-Steuereinrichtung 14 gesteuert werden können. Über die Getriebe-Steuereinrichtung 14 kann automatisch ein der aktuellen Fahrsituation entsprechender Fahrzeuggetriebe-Gang GF, d.h. eine entsprechende Motor-Übersetzung REng, oder optional auch aufgrund einer Kraftsparfunktion der Leerlauf L eingestellt werden, indem beispielsweise ausgekuppelt wird, so dass der Antriebsmotor 10 optional auch kraftsparend betrieben werden kann.

Weiterhin kann der Getriebe-Steuereinrichtung 14 beispielsweise über die Datenbusverbindung 12 ein Getriebe-Steuersignal SGear_in vorgegeben werden, aufgrund dessen das Fahrzeugschaltgetriebe 13 automatisiert ausgekuppelt werden und in den Leerlauf L oder in einen bestimmten Fahrzeuggetriebe-Gang GF geschaltet werden kann. Daraufhin wird vom Fahrzeugschaltgetriebe 13 eine bestimmte Motor-Übersetzung REng eingestellt. Außerdem kann die Getriebe-Steuereinrichtung 14 über ein Getriebe-Ausgangssignal SGear_out beispielsweise an die Datenbusverbindung 12 ausgeben, welcher Fahrzeuggetriebe-Gang GF eingelegt ist oder ob sich das Fahrzeugschaltgetriebe 13 im Leerlauf L befindet. Optional kann auch die dem jeweiligen Fahrzeuggetriebe-Gang GF zugeordnete Motor-Übersetzung REng sowie die aktuelle Getriebeausgangsdrehzahl nGear über das Getriebe-Ausgangssignal SGear_out auf die Datenbusverbindung 12 übertragen werden.

Zur erfindungsgemäßen Lenk-Unterstützung nach Erkennen einer drohenden Kollision, d.h. in einem Kollisions-Assistenzfall A, ist zusätzlich eine Notbrems-Steuereinrichtung (AEBS-ECU) 20 sowie eine Servo-Steuereinrichtung 30 an die Datenbusverbindung 12 angeschlossen. Ist ein automatisiertes Lenksystem 300 im Fahrzeug 100 vorhanden, kann die Servo-Steuereinrichtung 30 auch in der Lenk-Steuereinrichtung 301 integriert sein.

Die Notbrems-Steuereinrichtung 20 ist beispielsweise Teil eines Notbremssystems (AEBS), das eine drohende Kollision mit einem Kollisionsobjekt O anhand einer Umfeld-Überwachung erkennen und darauf entsprechend reagieren kann, beispielsweise mit einer Anforderung einer Notbremsung. Wird eine drohende Kollision mit einem Kollisionsobjekt O erkannt, wird von der Notbrems-Steuereinrichtung 20 ein Kollisions-Warnsignal SCW an die Datenbusverbindung 12 ausgegeben. Dieses Kollisions-Warnsignal SCW kann gleichzeitig von der Servo-Steuereinrichtung 30 über die Datenbusverbindung 12 aufgenommen werden.

Liegt ein Kollisions-Warnsignal SCW vor, tritt der Kollisions-Assistenzfall A ein und die Servo-Steuereinrichtung 30 sorgt erfindungsgemäß dafür, dass von der Hydraulikpumpe 2 ein entsprechender Ist-Volumenstrom QIst für eine ausreichende Lenk-Unterstützung im Kollisions-Assistenzfall A bereitgestellt wird. Dadurch soll erreicht werden, dass bei einer drohenden Kollision eine Hydraulikflüssigkeit 6 mit einem genügend hohen Ist-Volumenstrom Qlst zur Verfügung steht, falls der Fahrer oder optional auch das automatisierte Lenksystem 300 im Kollisions-Assistenzfall A dem Kollisionsobjekt O mit einem hohen Lenkwinkel w ausweichen möchten. Somit wird nicht erst dann reagiert, wenn der Fahrer oder das automatisierte Lenksystem 300 mit einer Lenkung beginnt und über den Lenksensor 8 eine Lenkanforderung ALenk erkannt wurde, sondern bereits dann, wenn eine drohende Kollision erkannt und über die Datenbusverbindung 12 ausgegeben wurde.

Um für eine ausreichende Lenk-Unterstützung zu sorgen, überprüft die Servo-Steuereinrichtung 30, ob der aktuell bereitgestellte Ist-Volumenstrom QIst, der durch die aktuelle Pumpendrehzahl nPump bestimmt wird, oberhalb eines Mindest-Volumenstroms QMin liegt. Der Mindest-Volumenstrom QMin ist hierbei derartig abgestimmt, dass im Kollisions-Assistenzfall A für eine ausreichende Lenk-Unterstützung mit hohem Lenkwinkel w bei hoher Lenkgeschwindigkeit vLenk gesorgt werden kann. Da die Servo-Steuereinrichtung 30 den Ist-Volumenstrom QIst gemäß dieser Ausführungsform nicht direkt misst, berechnet die Servo-Steuereinrichtung 30 den Ist-Volumenstrom QIst aus den über die Datenbusverbindung 12 übertragenen Informationen.

Dazu wird zunächst das Getriebe-Ausgangssignal SGear_out bewertet. D.h. es wird geprüft, welcher Fahrzeuggetriebe-Gang GF eingelegt ist oder ob der Leerlauf L eingestellt ist. Ist ein bestimmter Fahrzeuggetriebe-Gang GF eingelegt, kann aus der über das Getriebe-Ausgangssignal SGear_out übertragenen Motor-Übersetzung REng zusammen mit einer aktuell gemessenen Fahrzeug-Geschwindigkeit vFzg die Motordrehzahl nEng abgeschätzt werden. Wird keine Motor-Übersetzung REng über das Getriebe-Ausgangssignal SGear_out übertragen, kann diese vorab auch während der Fahrt angelernt werden, indem die zur Hinterachse HA ausgesteuerte Getriebeausgangsdrehzahl nGear mit der Motordrehzahl nEng verglichen wird.

Alternativ kann direkt auf die über das Motor-Ausgangssignal SEng_out übertragene Motordrehzahl nEng zurückgegriffen werden. Dies ist beispielsweise dann erforderlich, wenn über das Getriebe-Ausgangssignal SGear_out festgestellt wurde, dass der Leerlauf L eingestellt ist und somit über das Fahrzeugschaltgetriebe 13 kein Drehmoment auf die Hinterachse HA übertragen wird und daher keine Berechnung der Motordrehzahl nEng aus der Motor-Übersetzung REng möglich ist.

Aus der dadurch ermittelten Motordrehzahl nEng kann die Servo-Steuereinrichtung 30 im Folgenden - ggf. unter Berücksichtigung der über den Pumpengetriebe-Gang GP eingestellten Pumpen-Übersetzung RPump - die Pumpendrehzahl nPump ermitteln. Aus dieser Pumpendrehzahl nPump folgt über eine Pumpenkennlinie K, die für die jeweilige Hydraulikpumpe 2 den Zusammenhang von Pumpendrehzahl nPump zu Ist-Volumenstrom QIst angibt, der zu erwartende Ist-Volumenstrom Qlst. Die Pumpenkennlinie K ist beispielsweise auf der Servo-Steuereinrichtung 30 gespeichert oder wird von der Hydraulikpumpe 2 bereitgestellt. Ist der Ist-Volumenstrom Qlst zu niedrig, d.h. liegt dieser unter dem vorab festgelegten Mindest-Volumenstrom QMin, erfolgt von der Servo-Steuereinrichtung 30 eine entsprechende Anforderung zum Erhöhen des Ist-Volumenstromes Qlst zumindest auf die Höhe des Mindest-Volumenstroms QMin.

Dazu wird von der Servo-Steuereinrichtung 30 über das Getriebe-Ausgangssignal SGear_out zunächst geprüft, ob ein Fahrzeuggetriebe-Gang GF eingelegt ist oder ob der Leerlauf L eingestellt ist.

Ist der Leerlauf L eingestellt, wird von der Servo-Steuereinrichtung 30 über die Datenbusverbindung 12 und über das Motor-Steuersignal SEng_in eine Anforderung zum Erhöhen der Motordrehzahl nEng an die Motor-Steuereinrichtung 11 ausgegeben. Die Motordrehzahl nEng wird dann so lange erhöht, bis eine Pumpendrehzahl nPump erreicht wird, für die anhand der Pumpenkennlinie Kein Ist-Volumenstrom Qlst folgt, der oberhalb des Mindest-Volumenstromes QMin liegt, so dass an das Lenkgetriebe 4 ein ausreichender Ist-Volumenstrom Qlst für den Kollisions-Assistenzfall A bereitgestellt werden kann.

Folgt aus dem Getriebe-Ausgangssignal SGear_out hingegen, dass ein bestimmter Fahrzeuggetriebe-Gang GF eingelegt ist, wird stattdessen von der Servo-Steuereinrichtung 30 über die Datenbusverbindung 12 und über das Getriebe-Steuersignal SGear_in eine Anforderung an die Getriebe-Steuereinrichtung 14 zum Verringern des Fahrzeuggetriebe-Gang GF ausgegeben. Durch ein Verringern des Fahrzeuggetriebe-Gang GF wird automatisch bewirkt, dass sich die Motordrehzahl nEng erhöht, da sich die Fahrzeug-Geschwindigkeit vFzg, wenn überhaupt, lediglich durch eine Motorbremsung geringfügig verändert. Gleichzeitig erhöht sich auch die Pumpendrehzahl nPump sowie der Ist-Volumenstrom Qlst. Welcher Fahrzeuggetriebe-Gang GF genau einzustellen ist, um den Mindest-Volumenstrom QMin zu erreichen, folgt aus der aktuellen Fahrzeug-Geschwindigkeit vFzg, der Motor-Übersetzung REng und der Pumpen-Übersetzung RPump, die die erforderliche Motordrehzahl nEng festlegen, die über die Pumpenkennlinie K zum Erreichen des Mindest-Volumenstromes QMin führt.

Dabei kann unter Kenntnis der Motor-Übersetzung REng auch sofort in den richtigen Fahrzeuggetriebe-Gang GF geschaltet werden, ohne vom aktuellen Fahrzeuggetriebe-Gang GF ausgehend in die dazwischen liegenden Fahrzeuggetriebe-Gänge GF zu schalten.

Ergänzend kann im Leerlauf L und ergänzend oder alternativ kann bei eingelegtem Fahrzeuggetriebe-Gang GF die Pumpendrehzahl nPump auch über eine Veränderung des Pumpengetriebe-Ganges GP erreicht werden. Demnach kann von der Servo-Steuereinrichtung 30 über die Datenbusverbindung 12 über das Pumpen-Steuersignal SPump_in eine Anforderung zum Verringern des Pumpengetriebe-Ganges GP ausgegeben werden. Dadurch kann auch bei niedrigen Motordrehzahlen nEng aufgrund eines hohen Fahrzeuggetriebe-Ganges GF oder im Leerlauf L bei niedrigen Motordrehzahlen nEng eine hohe Pumpendrehzahl nPump eingestellt werden, ohne dabei den Fahrzeuggetriebe-Gang GF zu verändern oder die Motordrehzahl nEng übermäßig direkt zu erhöhen.

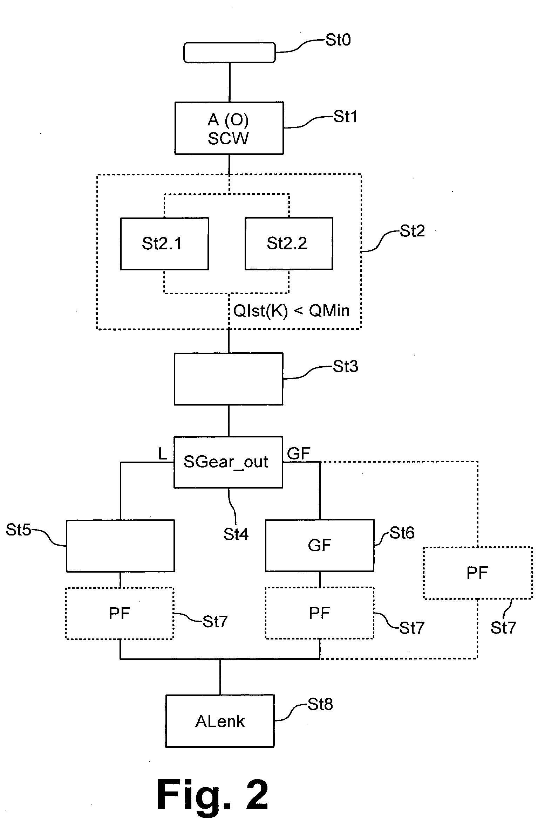

Das erfindungsgemäße Verfahren kann gemäß Fig. 2 beispielsweise folgendermaßen ausgeführt werden.

In einem anfänglichen Schritt St0 wird das hydraulische Servo-Lenksystem 200 initialisiert, beispielsweise mit dem Starten des Fahrzeuges 100.

In einem ersten Schritt St1 wird von der Servo-Steuereinrichtung 30 geprüft, ob ein Kollisions-Assistenzfall A vorliegt, d.h. ob von der Notbrems-Steuereinrichtung 20 ein Kollisions-Warnsignal SCW an die Datenbusverbindung ausgegeben wurde, weil eine drohende Kollision mit einem Kollisionsobjekt O erkannt wurde.

Ist dies der Fall, wird in einem zweiten Schritt St2 geprüft, ob aus der Motordrehzahl nEng ein Ist-Volumenstrom QIst folgt, der geringer ist als ein Mindest-Volumenstrom QMin, der erforderlich ist, um im Kollisions-Assistenzfall A eine ausreichende Lenk-Unterstützung über das hydraulische Servo-Lenksystem 200 bereitzustellen.

Dazu wird in einem ersten Teilschritt St2.1 entweder anhand der aktuellen Fahrzeug-Geschwindigkeit vFzg sowie der Motor-Übersetzung REng geprüft, ob eine aktuelle Motordrehzahl nEng vorliegt, die zu einer Pumpendrehzahl nPump führt, aus der über eine Pumpenkennlinie K ein ausreichender Ist-Volumenstrom QIst folgt, der größer gleich dem Mindest-Volumenstrom QMin ist. Alternativ kann in einem zweiten Teilschritt St2.2 die Motordrehzahl nEng direkt von der Motor-Steuereinrichtung 11 ausgelesen werden, um auf den aktuellen Ist-Volumenstrom QIst zu schließen.

In einem dritten Schritt St3 wird bei Feststellen, dass der Ist-Volumenstrom Qlst geringer ist als der Mindest-Volumenstrom QMin, von der Servo-Steuereinrichtung 30 eine Anforderung an die Datenbusverbindung 12 ausgegeben, dass die Motordrehzahl nEng und/oder die Pumpendrehzahl nPump zu erhöhen ist, um automatisch auch den Ist-Volumenstrom QIst zu erhöhen. Dazu wird in einem vierten Schritt St4 zunächst geprüft, ob das Fahrzeugschaltgetriebe 13 einen bestimmten Fahrzeuggetriebe-Gang GF eingelegt hat oder der Leerlauf L eingestellt ist. Dies erfolgt durch Bewerten des Getriebe-Ausgangssignals SGear_out.

Ist der Leerlauf L eingelegt, um beispielsweise Kraftstoff zu sparen, wird in einem fünften Schritt St5 von der Servo-Steuereinrichtung 30 über das Motor-Steuersignal SEng_in eine Anforderung direkt an die Motor-Steuereinrichtung 11 ausgegeben, die Motordrehzahl nEng direkt zu erhöhen. Dabei wird eine Motordrehzahl nEng angefordert, die zu einem Ist-Volumenstrom QIst führt, der größer oder gleich dem Mindest-Volumenstrom QMin ist. Dies erfolgt unter Berücksichtigung der Pumpen-Übersetzung RPump sowie der Pumpenkennlinie K über die aus der angeforderten Motordrehzahl nEng der zu erwartende Ist-Volumenstrom Qlst folgt.

Ist hingegen ein Fahrzeuggetriebe-Gang GF eingelegt, wird statt dem fünften Schritt St5 in einem sechsten Schritt St6 über das Getriebe-Steuersignal SGear_in in einen niedrigeren Fahrzeuggetriebe-Gang GF geschaltet, aufgrund dessen sich automatisch eine erhöhte Motordrehzahl nEng einstellt, die zu einer erhöhten Pumpendrehzahl nPump und einem erhöhten Ist-Volumenstrom Qlst führt. Auch hier wird der Fahrzeuggetriebe-Gang GF wieder derartig gewählt, dass sich ein Ist-Volumenstrom Qlst ergibt, der größer als der Mindest-Volumenstrom QMain ist, um für eine ausreichende Lenk-Unterstützung im Kollisions-Assistenzfall A zu sorgen.

In einem siebenten Schritt St7, der optional ergänzend zum fünften Schritt St5 und ergänzend oder alternativ zum sechsten Schritt St6 durchgeführt werden kann, wird über das Pumpen-Steuersignal SPump_in die Pumpen-Übersetzung RPump geändert, indem in einen geringeren Pumpengetriebe-Gang GP geschaltet wird, um auch bei niedrigen Motordrehzahlen nEng eine Pumpendrehzahl nPump zu erreichen, die den Ist-Volumenstrom QIst zumindest auf den Mindest-Volumenstrom QMin anhebt.

Somit kann in einem achten Schritt St8 ein ausreichender Ist-Volumenstrom QIst bereitgestellt werden, falls eine Lenkanforderung ALenk vom Fahrer über das Lenkrad 1 oder von dem automatisierten Lenksystem 300 über den Elektromotor 302 infolge des Kollisions-Assistenzfalles A erfolgt, um das Kollisionsobjekt O zu umgehen.

### Bezugszeichenliste (Bestandteil der Beschreibung)

1 Lenkrad
2 Hydraulikpumpe
3 Hydraulikleitung
4 Lenkgetriebe
5 Räder
6 Hydraulikflüssigkeit
7 Lenkstrebe
8 Lenksensor
9 Pumpengetriebe
10 Antriebsmotor
11 Motor-Steuereinrichtung
12 Datenbusverbindung
13 Fahrzeugschaltgetriebe
14 Getriebe-Steuereinrichtung
15 Antriebswelle
20 Notbrems-Steuereinrichtung (AEBS-ECU)
30 Servo-Steuereinrichtung
100 Fahrzeug
200 hydraulisches Servo-Lenksystem
300 automatisiertes Lenksystem
301 Lenk-Steuereinrichtung (EMA-ECU)
302 Elektromotor

A Kollisions-Assistenzfall
ALenk Lenkanforderung
GP Pumpengetriebe-Gang
GF Fahrzeuggetriebe-Gang
HA Hinterachse
K Pumpenkennlinie
L Leerlauf
nPump Pumpendrehzahl
nEng Motordrehzahl
nGear Getriebeausgangsdrehzahl
O Kollisionsobjekt
QIst Ist-Volumenstrom
QMin Mindest-Volumenstrom
REng Motor-Übersetzung
RPump Pumpen-Übersetzung
SLenk Lenksignal
SEng_in Motor-Steuersignal
SEng_out Motor-Ausgangssignal
SGear_in Getriebe-Steuersignal
SGear_out Getriebe-Ausgangssignal
SCW Kollisions-Warnsignal
VA Vorderachse
vFzg Fahrzeug-Geschwindigkeit
vLenk Lenkgeschwindigkeit
w Lenkwinkel
St0, St1, St2, St2.1, St2.2, St3, St4, St5, St6, St7, St8 Schritte des Verfahrens

## Patentansprüche

1. Verfahren zum Steuern eines hydraulischen Servo-Lenksystems (200) in einem Fahrzeug (100), insbesondere Nutzfahrzeug, mit mindestens den folgenden Schritten :
- Auslesen eines Kollisions-Warnsignals (SCW) zum Feststellen, ob ein Kollisions-Assistenzfall (A) vorliegt (St1),
- Prüfen, ob bei Vorliegen eines Kollisions-Assistenzfalles (A) eine von einer Hydraulikpumpe (2) des Servo-Lenksystems (200) bereitgestellte, der Lenk-Unterstützung dienende Hydraulikflüssigkeit (6) einen Ist-Volumenstrom (QIst) aufweist, der größer oder gleich einem Mindest-Volumenstrom (QMin) ist (St2),
- Erhöhen einer Pumpendrehzahl (nPump), falls der Ist-Volumenstrom (QIst) bei Vorliegen eines Kollisions-Assistenzfalles (A) kleiner als dem Mindest-Volumenstrom (QMin) ist (St3), wobei die Pumpendrehzahl (nPump) abhängig von einer Motordrehzahl (nEng) eines mit der Hydraulikpumpe (2) zusammenwirkenden Antriebsmotors (10) ist.

2. Verfahren nach Anspruch 1, **dadurch gekennzeichnet, dass** zum Erhöhen der Pumpendrehzahl (nPump) ein Erhöhen der Motordrehzahl (nEng) des Antriebsmotors (10) des Fahrzeuges (100) erfolgt (St4, St5, St6), wobei der Antriebsmotor (10) derartig mit der Hydraulikpumpe (2) zusammenwirkt, dass durch das Erhöhen der Motordrehzahl (nEng) der bereitgestellte Ist-Volumenstrom (QIst) der Hydraulikflüssigkeit (6) erhöht wird.

3. Verfahren nach Anspruch 2, **dadurch gekennzeichnet, dass** zum Erhöhen der Motordrehzahl (nEng) des Antriebsmotors (10) zunächst geprüft wird, ob durch ein Fahrzeugschaltgetriebe (13) des Fahrzeuges (100) ein bestimmter Fahrzeuggetriebe-Gang (GF) eingelegt ist oder ein Leerlauf (L) eingestellt ist (St4), wobei dazu eine Getriebe-Steuereinrichtung (14) des Fahrzeugschaltgetriebes (13) ein Getriebe-Ausgangssignal (SGear_out) ausgibt, das angibt, welcher Fahrzeuggetriebe-Gang (GF) eingelegt ist oder ob sich das Fahrzeugschaltgetriebe (13) im Leerlauf (L) befindet.

4. Verfahren nach Anspruch 3, **dadurch gekennzeichnet, dass** bei einem Feststellen, dass sich das Fahrzeugschaltgetriebe (13) im Leerlauf (L) befindet, ein Motor-Steuersignal (SEng_in) an eine Motor-Steuereinrichtung (11) des Antriebsmotors (10) ausgegeben wird, aufgrund dessen eine direkte Erhöhung der Motordrehzahl (nEng) und somit eine Erhöhung des Ist-Volumenstroms (Qlst) erfolgt (St5).

5. Verfahren nach Anspruch 3 oder 4, **dadurch gekennzeichnet, dass** bei Feststellen, dass durch das Fahrzeugschaltgetriebe (13) ein bestimmter Fahrzeuggetriebe-Gang (GF) eingelegt ist, ein Getriebe-Steuersignal (SGear_in) an die Getriebe-Steuereinrichtung (14) des Fahrzeugschaltgetriebes (13) ausgegeben wird, aufgrund dessen der eingestellte Fahrzeuggetriebe-Gang (GF) verringert wird, wobei aufgrund des Verringerns des eingestellten Fahrzeuggetriebe-Ganges (GF) die Motordrehzahl (nEng) durch Verändern der Motor-Übersetzung (REng) erhöht wird und somit eine Erhöhung des Ist-Volumenstromes (QIst) erfolgt (St6).

6. Verfahren nach einem der Ansprüche 1 bis 5, **dadurch gekennzeichnet, dass** zum Erhöhen der Pumpendrehzahl (nPump) eine durch ein Pumpengetriebe (9) zwischen der Hydraulikpumpe (2) und dem Antriebsmotor (10) festgelegte Pumpen-Übersetzung (RPump) verändert wird (St7).

7. Verfahren nach Anspruch 6, **dadurch gekennzeichnet, dass** zum Verändern der Pumpe-Übersetzung (RPump) ein Pumpengetriebe-Gang (GP) verringert wird, wobei aufgrund des Verringerns des eingestellten Pumpengetriebe-Ganges (GP) die Pumpendrehzahl (nPump) durch Verändern der Pumpen-Übersetzung (RPump) erhöht wird und somit eine Erhöhung des Ist-Volumenstromes (Qlst) erfolgt.

8. Verfahren nach einem der Ansprüche 1 bis 7, **dadurch gekennzeichnet, dass** die Motordrehzahl (nEng) und/oder die Pumpen-Übersetzung (RPump) derartig eingestellt werden, dass der Ist-Volumenstrom (Qlst) größer oder gleich dem Mindest-Volumenstrom (QMin) ist, wobei dazu
- der Fahrzeuggetriebe-Gang (GF) und/oder der Pumpengetriebe-Gang (GP) so stark verringert werden, oder
- im Leerlauf (L) ein Motor-Steuersignal (SEng_in) an die Motor-Steuereinrichtung (11) des Antriebsmotors (10) ausgegeben wird und/oder der Pumpengetriebe-Gang (GP) so stark verringert wird, dass sich eine Motordrehzahl (nEng) ergibt, die zu einem Ist-Volumenstrom (QIst) führt, der größer oder gleich dem Mindest-Volumenstrom (QMin) ist.

9. Verfahren nach einem der Ansprüche 1 bis 8, **dadurch gekennzeichnet, dass** zum Prüfen, ob der Ist-Volumenstrom (QIst) größer oder gleich dem Mindest-Volumenstrom (QMin) ist, die Motordrehzahl (nEng) des Antriebsmotors (10) ermittelt wird.

10. Verfahren nach Anspruch 9, **dadurch gekennzeichnet, dass** die Motordrehzahl (nEng) über ein von einer Motor-Steuereinrichtung (11) des Antriebsmotors (10) übermitteltes Motor-Ausgangssignal (SEng_out) ermittelt wird, wobei die Motor-Steuereinrichtung (11) die Motordrehzahl (nEng) misst (St2.2).

11. Verfahren nach Anspruch 9 oder 10, **dadurch gekennzeichnet, dass** die Motordrehzahl (nEng) aus einer aktuellen Fahrzeug-Geschwindigkeit (vFzg) unter Berücksichtigung einer Motor-Übersetzung (REng) eines zwischen dem Antriebsmotor (10) und einer Antriebswelle (15) des Fahrzeuges (100) angeordneten Fahrzeugschaltgetriebes (13) ermittelt wird (St2.1).

12. Verfahren nach Anspruch 11, **dadurch gekennzeichnet, dass** die Motor-Übersetzung (REng) auf einer Getriebe-Steuereinrichtung (14) gespeichert ist oder während der Fahrt ermittelt wird, indem aus der Motordrehzahl (nEng) und einer auf die Antriebswelle (15) übertragenen Getriebeausgangsdrehzahl (nGear) eine Motor-Übersetzung (REng) berechnet wird.

13. Verfahren nach einem der Ansprüche 9 bis 12, **dadurch gekennzeichnet, dass** aus der Motordrehzahl (nEng) eine Pumpendrehzahl (nPump) der Hydraulikpumpe (2) bestimmt wird und über eine der Hydraulikpumpe (2) zugeordneten Pumpenkennlinie (K) aus der Pumpendrehzahl (nPump) der Ist-Volumenstrom (QIst).

14. Verfahren nach Anspruch 13, **dadurch gekennzeichnet, dass** zur Bestimmung der Pumpendrehzahl (nPump) aus der Motordrehzahl (nEng) eine Pumpen-Übersetzung (RPump) eines zwischen dem Antriebsmotor (10) und der Hydraulikpumpe (2) angeordneten Pumpengetriebes (9) berücksichtigt wird.

15. Verfahren nach einem der vorhergehenden Ansprüche, **dadurch gekennzeichnet, dass** das Kollisions-Warnsignal (SCW) von einer Notbrems-Steuereinrichtung (20) ausgegeben wird, wobei die Notbrems-Steuereinrichtung (20) ausgebildet ist, bei Feststellen einer drohenden Kollision mit einem Kollisionsobjekt (O) das Kollisions-Warnsignal (SCW) auszugeben.

16. Verfahren nach einem der vorhergehenden Ansprüche, **dadurch gekennzeichnet, dass** das Prüfen ob ein Ist-Volumenstrom (QIst) vorliegt, der größer oder gleich einem Mindest-Volumenstrom (QMin) ist (St2), sowie das Erhöhen der Motordrehzahl (nEng) (St3) von einer Servo-Steuereinrichtung (30) gesteuert wird, die über eine Datenbusverbindung (12) die entsprechenden Signale (SEng_out, SGear_out, SEng_in, SGear_out) aufnimmt und ausgibt.

17. Verfahren nach einem der vorhergehenden Ansprüche, **dadurch gekennzeichnet, dass** das hydraulische Servo-Lenksystem (200) eine Lenkanforderung (ALenk) unterstützt, die von einem Lenkrad (1) manuell vorgegeben wird oder die von einem automatisierten Lenksystem (300) über einen Elektromotor (302) vorgegeben wird, wobei über die Hydraulikflüssigkeit (6) mit dem Ist-Volumenstrom (QIst) insbesondere im Kollisions-Assistenzfall (A) eine mechanische Umsetzung der Lenkanforderung (ALenk) in eine Lenkbewegung von Rädern (5) über ein Lenkgetriebe (4) unterstützt wird (St8).

18. Verfahren nach einem der vorhergehenden Ansprüche, **dadurch gekennzeichnet, dass** ein Erhöhen der Motordrehzahl (nEng) nicht an eine Lenkanforderung (ALenk) gekoppelt ist.

19. Hydraulisches Servo-Lenksystem (200), insbesondere geeignet zur Durchführung des Verfahrens nach einem der vorhergehenden Ansprüche, mindestens aufweisend:
- eine Hydraulikpumpe (2) zum Ausgeben einer Hydraulikflüssigkeit (6) mit einem Ist-Volumenstrom (Qlst), wobei der Ist-Volumenstrom (QIst) abhängig von einer Pumpendrehzahl (nPump) der Hydraulikpumpe (2) ist,
- ein über eine Hydraulikleitung (3) mit der Hydraulikpumpe (2) verbundenes Lenkgetriebe (4), wobei das Lenkgetriebe (4) eine Lenkanforderung (ALenk) mechanisch in eine Lenkbewegung von Rädern (5) des Fahrzeuges (100) umsetzt und das Lenkgetriebe (4) ausgebildet ist, durch die Hydraulikflüssigkeit (6) unterstützt zu werden, und
- eine Servo-Steuereinrichtung (30) zum Steuern des Servo-Lenksystems (200),
**dadurch gekennzeichnet, dass**
weiterhin ein mit der Hydraulikpumpe (2) sowie mit einem Fahrzeugschaltgetriebe (13) in mechanischer Wirkverbindung stehender Antriebsmotor (10), und eine Servo-Steuereinrichtung (30) vorgesehen sind, wobei das Fahrzeugschaltgetriebe (13) eine von dem Antriebsmotor (10) ausgesteuerte Motordrehzahl (nEng) über eine Motor-Übersetzung (REng) auf einen Antriebswelle (15) des Fahrzeuges (100) überträgt zum Antreiben von Rädern (5) des Fahrzeuges (100), und die Pumpendrehzahl (nPump) der Hydraulikpumpe (2) abhängig von der Motordrehzahl (nEng) ist, und
wobei die Servo-Steuereinrichtung (30) ausgebildet ist, in einem Kollisions-Assistenzfall (A) die Pumpendrehzahl (nPump) derartig einzustellen dass ein Ist-Volumenstrom (QIst) vorgegeben wird, der größer oder gleich dem Mindest-Volumenstrom (QMin) ist.

20. Hydraulisches Servo-Lenksystem (200) nach Anspruch 19, **dadurch gekennzeichnet, dass** zwischen dem Antriebsmotor (10) und der Hydraulikpumpe (20) ein Pumpengetriebe (9) angeordnet ist zum Festlegen einer Pumpen-Übersetzung (RPump).

21. Hydraulisches Servo-Lenksystem (200) nach Anspruch 20, **dadurch gekennzeichnet, dass** die Servo-Steuereinrichtung (30) ausgebildet ist, die Pumpen-Übersetzung (RPump) zu verändern zum Erhöhen der Pumpendrehzahl (nPump), falls im Kollisions-Assistenzfall (A) der Ist-Volumenstrom (Qlst) kleiner ist als der Mindest-Volumenstrom (QMin).

22. Hydraulisches Servo-Lenksystem (200) nach einem der Ansprüche 19 bis 21, **dadurch gekennzeichnet, dass** die Servo-Steuereinrichtung (30) ausgebildet ist, die Motor-Übersetzung (REng) durch Verringern des Fahrzeuggetriebe-Ganges (GF) zu verändern zum Erhöhen der Motordrehzahl (nEng), falls im Kollisions-Assistenzfall (A) der Ist-Volumenstrom (QIst) kleiner ist als der Mindest-Volumenstrom (QMin).

23. Hydraulisches Servo-Lenksystem (200) nach einem der Ansprüche 19 bis 22, **dadurch gekennzeichnet, dass** die Servo-Steuereinrichtung (30) ausgebildet ist, den Antriebsmotor (10) über eine Motor-Steuereinrichtung (11) direkt anzusteuern zum Erhöhen der Motordrehzahl (nEng), falls im Kollisions-Assistenzfall (A) der Ist-Volumenstrom (QIst) kleiner ist als der Mindest-Volumenstrom (QMin).

24. Fahrzeug (100), insbesondere Nutzfahrzeug (100), mit einem hydraulischen Servo-Lenksystem (200) nach einem der Ansprüche 19 bis 23, insbesondere geeignet zur Durchführung eines Verfahrens nach einem der Ansprüche 1 bis 18, sowie einer Notbrems-Steuereinrichtung (20) zum Vorgeben des Kollisions-Warnsignals (SCW).

## Claims

1. Method for controlling a hydraulic servo steering system (200) in a vehicle (100), in particular a utility vehicle, with at least the following steps:
- reading out a collision warning signal (SCW) for the purpose of establishing whether a collision assistance case (A) obtains (St1),
- checking whether, when a collision assistance case (A) obtains, a hydraulic fluid (6) provided by a hydraulic pump (2) of the servo steering system (200) and serving for steering assistance has an actual volumetric flow-rate (QIst) that is greater than or equal to (St2) a minimum volumetric flow-rate (QMin),
- increasing a pump speed (nPump) in case the actual volumetric flow-rate (QIst) when a collision assistance case (A) obtains is less than (St3) the minimum volumetric flow-rate (QMin), said pump speed (nPump) being dependent on an engine/motor speed (nEng) of a drive engine/motor (10) interacting with the hydraulic pump (2).

2. Method according to Claim 1, **characterized in that** for the purpose of increasing the pump speed (nPump) an increasing of the engine/motor speed (nEng) of the drive engine/motor (10) of the vehicle (100) is effected (St4, St5, St6), said drive engine/motor (10) interacting with the hydraulic pump (2) in such a manner that by virtue of the increasing of the engine/motor speed (nEng) the actual volumetric flow-rate (QIst) of the hydraulic fluid (6) which is provided is increased.

3. Method according to Claim 2, **characterized in that** for the purpose of increasing the engine/motor speed (nEng) of the drive engine/motor (10) a check is firstly carried out as to whether a defined vehicle-transmission gear (GF) has been engaged by a vehicle gearshift transmission (13) of the vehicle (100) or an idling state (L) has been set (St4), whereby for this purpose a transmission control unit (14) of the vehicle gearshift transmission (13) outputs a transmission output signal (SGear_out) that specifies which vehicle-transmission gear (GF) has been engaged or whether the vehicle gearshift transmission (13) is in the idling state (L).

4. Method according to Claim 3, **characterized in that** in the case where it is established that the vehicle gearshift transmission (13) is in the idling state (L) an engine/motor control signal (SEng_in) is output to an engine/motor control unit (11) of the drive engine/motor (10), by reason of which a direct increase of the engine/motor speed (nEng) and consequently an increase of the actual volumetric flow-rate (QIst) is effected (St5).

5. Method according to Claim 3 or 4, **characterized in that** in the case where it is established that a defined vehicle-transmission gear (GF) has been engaged by the vehicle gearshift transmission (13) a transmission control signal (SGear_in) is output to the transmission control unit (14) of the vehicle gearshift transmission (13), by reason of which the vehicle-transmission gear (GF) that has been set is decreased, whereby by reason of the decreasing of the set vehicle-transmission gear (GF) the engine/motor speed (nEng) is increased by changing the engine/motor gear ratio (REng), and consequently an increase of the actual volumetric flow-rate (QIst) is effected (St6) .

6. Method according to one of Claims 1 to 5, **characterized in that** for the purpose of increasing the pump speed (nPump) a pump gear ratio (RPump) defined by a pump gearing (9) between the hydraulic pump (2) and the drive engine/motor (10) is changed (St7) .

7. Method according to Claim 6, **characterized in that** for the purpose of changing the pump gear ratio (RPump) a pump-transmission gear (GP) is decreased, whereby by reason of the decreasing of the set pump-transmission gear (GP) the pump speed (nPump) is increased by changing the pump gear ratio (RPump), and consequently an increase of the actual volumetric flow-rate (QIst) is effected.

8. Method according to one of Claims 1 to 7, **characterized in that** the engine/motor speed (nEng) and/or the pump gear ratio (RPump) is/are set in such a manner that the actual volumetric flow-rate (QIst) is greater than or equal to the minimum volumetric flow-rate (QMin), whereby for this purpose
- the vehicle-transmission gear (GF) and/or the pump-transmission gear (GP) is/are decreased so greatly or
- in the idling state (L) an engine/motor control signal (SEng_in) is output to the engine/motor control unit (11) of the drive engine/motor (10), and/or the pump-transmission gear (GP) is decreased so greatly that an engine/motor speed (nEng) arises that leads to an actual volumetric flow-rate (QIst) that is greater than or equal to the minimum volumetric flow-rate (QMin).

9. Method according to one of Claims 1 to 8, **characterized in that** for the purpose of checking whether the actual volumetric flow-rate (QIst) is greater than or equal to the minimum volumetric flow-rate (QMin) the engine/motor speed (nEng) of the drive engine/motor (10) is ascertained.

10. Method according to Claim 9, **characterized in that** the engine/motor speed (nEng) is ascertained via an engine/motor output signal (SEng_out) communicated from an engine/motor control unit (11) of the drive engine/motor (10), said engine/motor control unit (11) measuring (St2.2) the engine/motor speed (nEng).

11. Method according to Claim 9 or 10, **characterized in that** the engine/motor speed (nEng) is ascertained (St2.1) from a current vehicle speed (vFzg), taking into consideration an engine/motor gear ratio (REng) of a vehicle gearshift transmission (13) arranged between the drive engine/motor (10) and a drive shaft (15) of the vehicle (100).

12. Method according to Claim 11, **characterized in that** the engine/motor gear ratio (REng) has been stored in a transmission control unit (14) or is ascertained during the trip, by an engine/motor gear ratio (REng) being calculated from the engine/motor speed (nEng) and from a transmission output speed (nGear) transmitted to the drive shaft (15).

13. Method according to one of Claims 9 to 12, **characterized in that** a pump speed (nPump) of the hydraulic pump (2) is determined from the engine/motor speed (nEng), and the actual volumetric flow-rate (QIst) is determined from the pump speed (nPump) via a pump characteristic (K) assigned to the hydraulic pump (2).

14. Method according to Claim 13, **characterized in that** for the purpose of determining the pump speed (nPump) from the engine/motor speed (nEng) a pump gear ratio (RPump) of a pump gearing (9) arranged between the drive engine/motor (10) and the hydraulic pump (2) is taken into consideration.

15. Method according to one of the preceding claims, **characterized in that** the collision warning signal (SCW) is output from an emergency-braking control unit (20), said emergency-braking control unit (20) being designed to output the collision warning signal (SCW) in the case where an impending collision with a collision object (O) is established.

16. Method according to one of the preceding claims, **characterized in that** the checking as to whether an actual volumetric flow-rate (QIst) obtains that is greater than or equal to (St2) a minimum volumetric flow-rate (QMin) and also the increasing (St3) of the engine/motor speed (nEng) are controlled by a servo control unit (30) which receives and outputs the corresponding signals (SEng_out, SGear_out, SEng_in, SGear_out) via a data-bus connection (12).

17. Method according to one of the preceding claims, **characterized in that** the hydraulic servo steering system (200) assists a steering demand (ALenk) which is preset manually by a steering-wheel (1) or which is preset by an automated steering system (300) via an electric motor (302), wherein via the hydraulic fluid (6) with the actual volumetric flow-rate (QIst), in particular in the collision assistance case (A), a mechanical conversion of the steering demand (ALenk) into a steering motion of wheels (5) is assisted (St8) via a steering mechanism (4).

18. Method according to one of the preceding claims, **characterized in that** an increasing of the engine/motor speed (nEng) is not coupled to a steering demand (ALenk).

19. Hydraulic servo steering system (200), in particular suitable for implementing the method according to one of the preceding claims, at least exhibiting:
- a hydraulic pump (2) for outputting a hydraulic fluid (6) having an actual volumetric flow-rate (QIst), said actual volumetric flow-rate (QIst) being dependent on a pump speed (nPump) of the hydraulic pump (2),
- a steering mechanism (4) connected to the hydraulic pump (2) via a hydraulic line (3), said steering mechanism (4) converting a steering demand (ALenk) mechanically into a steering motion of wheels (5) of the vehicle (100), and the steering mechanism (4) being designed to be assisted by the hydraulic fluid (6), and
- a servo control unit (30) for controlling the servo steering system (200),
**characterized in that**
furthermore a drive engine/motor (10), which has been actively linked mechanically with the hydraulic pump (2) and also with a vehicle gearshift transmission (13), and a servo control unit (30) are provided,
said vehicle gearshift transmission (13) transmitting an engine/motor speed (nEng) supplied from the drive engine/motor (10) to a drive shaft (15) of the vehicle (100) via an engine/motor gear ratio (REng) for the purpose of driving wheels (5) of the vehicle (100), and the pump speed (nPump) of the hydraulic pump (2) being dependent on the engine/motor speed (nEng), and
said servo control unit (30) being designed to set the pump speed (nPump) in a collision assistance case (A) in such a manner that an actual volumetric flow-rate (QIst) is preset that is greater than or equal to the minimum volumetric flow-rate (QMin).

20. Hydraulic servo steering system (200) according to Claim 19, **characterized in that** a pump gearing (9) is arranged between the drive engine/motor (10) and the hydraulic pump (20) for the purpose of defining a pump gear ratio (RPump).

21. Hydraulic servo steering system (200) according to Claim 20, **characterized in that** the servo control unit (30) is designed to change the pump gear ratio (RPump) for the purpose of increasing the pump speed (nPump) in case the actual volumetric flow-rate (QIst) in the collision assistance case (A) is less than the minimum volumetric flow-rate (QMin).

22. Hydraulic servo steering system (200) according to one of Claims 19 to 21, **characterized in that** the servo control unit (30) is designed to change the engine/motor gear ratio (REng) by decreasing the vehicle-transmission gear (GF) for the purpose of increasing the engine/motor speed (nEng) in case the actual volumetric flow-rate (QIst) in the collision assistance case (A) is less than the minimum volumetric flow-rate (QMin).

23. Hydraulic servo steering system (200) according to one of Claims 19 to 22, **characterized in that** the servo control unit (30) is designed to actuate the drive engine/motor (10) directly via an engine/motor control unit (11) for the purpose of increasing the engine/motor speed (nEng) in case the actual volumetric flow-rate (QIst) in the collision assistance case (A) is less than the minimum volumetric flow-rate (QMin).

24. Vehicle (100), in particular utility vehicle (100), with a hydraulic servo steering system (200) according to one of Claims 19 to 23, in particular suitable for implementing a method according to one of Claims 1 to 18, and also with an emergency-braking control unit (20) for presetting the collision warning signal (SCW).

## Revendications

1. Procédé de commande d'un système de direction assistée hydraulique (200) dans un véhicule (100), en particulier un véhicule utilitaire, comprenant au moins les étapes suivantes :
- lecture d'un signal d'avertissement anticollision (SCW) pour établir si un cas d'assistance anticollision (A) est présent (St1),
- vérification si, en présence d'un cas d'assistance anticollision (A), un liquide hydraulique (6) fourni par une pompe hydraulique (2) du système de direction assistée (200) et servant d'assistance à la direction présente un débit volumique réel (QIst) qui est supérieur ou égal à un débit volumique minimal (QMin) (St2),
- augmentation d'un régime de pompe (nPump), dans le cas où le débit volumique réel (QIst), en présence d'un cas d'assistance anticollision (A), est inférieur au débit volumique minimal (QMin) (St3), dans lequel le régime de pompe (nPump) est dépendant d'un régime (nEng) d'un moteur d'entraînement (10) coopérant avec la pompe hydraulique (2).

2. Procédé selon la revendication 1, **caractérisé en ce que** pour l'augmentation du régime de pompe (nPump), une augmentation du régime (nEng) du moteur d'entraînement (10) du véhicule (100) est effectuée (St4, St5, St6), le moteur d'entraînement (10) coopérant avec la pompe hydraulique (2) de telle sorte que, par augmentation du régime de moteur (nEng), le débit volumique réel fourni (QIst) du liquide hydraulique (6) est augmenté.

3. Procédé selon la revendication 2, **caractérisé en ce que**, pour l'augmentation du régime (nEng) du moteur d'entraînement (10), on vérifie tout d'abord si une vitesse de transmission de véhicule déterminée (GF) est enclenchée par une transmission à changement de vitesses (13) du véhicule (100) ou si un point mort (L) est réglé (St4), un dispositif de commande (14) de la transmission à changement de vitesses de véhicule (13) délivrant à cet effet un signal de sortie de transmission (SGear_out), qui indique quelle vitesse de transmission de véhicule (GF) est enclenchée ou si la transmission à changement de vitesses de véhicule (13) se trouve au point mort (L).

4. Procédé selon la revendication 3, **caractérisé en ce que** s'il est établi que la transmission à changement de vitesses de véhicule (13) se trouve au point mort (L), un signal de commande de moteur (SEng_in) est délivré à un dispositif de commande (11) du moteur d'entraînement (10), signal en raison duquel une augmentation directe du régime de moteur (nEng) et par conséquent une augmentation du débit volumique réel (QIst) sont effectuées (St5).

5. Procédé selon la revendication 3 ou 4, **caractérisé en ce que** s'il est établi qu'une vitesse de transmission de véhicule déterminée (GF) est enclenchée par la transmission à changement de vitesses de véhicule (13), un signal de commande de transmission (SGear_in) est délivré au dispositif de commande (14) de la transmission à changement de vitesses de véhicule (13), signal en raison duquel la vitesse de transmission de véhicule réglée (GF) est réduite, et en raison de la réduction de la vitesse de transmission de véhicule réglée (GF), le régime de moteur (nEng) étant augmenté par modification du rapport de transmission de moteur (REng) et par conséquent une augmentation du débit volumique réel (QIst) étant effectuée (St6).

6. Procédé selon l'une des revendications 1 à 5, **caractérisé en ce que** pour l'augmentation du régime de pompe (nPump), un rapport de transmission de pompe (RPump) défini par une transmission de pompe (9) entre la pompe hydraulique (2) et le moteur d'entraînement (10) est modifié (St7).

7. Procédé selon la revendication 6, **caractérisé en ce que** pour la modification du rapport de transmission de pompe (RPump), une vitesse de transmission de pompe (GP) est réduite, et en raison de la diminution de la vitesse de transmission de pompe réglée (GP), le régime de pompe (nPump) étant augmenté par modification du rapport de transmission de pompe (RPump) et par conséquent une augmentation du débit volumique réel (QIst) étant effectuée.

8. Procédé selon l'une des revendications 1 à 7, **caractérisé en ce que** le régime de moteur (nEng) et/ou le rapport de transmission de pompe (RPump) sont réglés de telle sorte que le débit volumique réel (QIst) est supérieur ou égal au débit volumique minimal (QMin), et à cet effet
- la vitesse de transmission de véhicule (GF) et/ou la vitesse de transmission de pompe (GP) étant réduites, ou
- au point mort (L), un signal de commande de moteur (SEng_in) étant délivré au dispositif de commande (11) du moteur d'entraînement (10) et/ou la vitesse de transmission de pompe (GP) étant réduite,
dans une mesure telle qu'un régime de moteur (nEng) soit produit, lequel mène à un débit volumique réel (QIst) qui est supérieur ou égal au débit volumique minimal (QMin).

9. Procédé selon l'une des revendications 1 à 8, **caractérisé en ce qu'**afin de vérifier si le débit volumique réel (QIst) est supérieur ou égal au débit volumique minimal (QMin), le régime (nEng) du moteur d'entraînement (10) est déterminé.

10. Procédé selon la revendication 9, **caractérisé en ce que** le régime de moteur (nEng) est déterminé par le biais d'un signal de sortie de moteur (SEng_out) transmis par un dispositif de commande (11) du moteur d'entraînement (10), le dispositif de commande de moteur (11) mesurant le régime de moteur (nEng) (St2.2).

11. Procédé selon la revendication 9 ou 10, **caractérisé en ce que** le régime de moteur (nEng) est déterminé à partir d'une vitesse de véhicule actuelle (vFzg) en tenant compte d'un rapport de transmission de moteur (REng) d'une transmission à changement de vitesses de véhicule (13) disposée entre le moteur d'entraînement (10) et un arbre d'entraînement (15) du véhicule (100) (St2.1).

12. Procédé selon la revendication 11, **caractérisé en ce que** le rapport de transmission de moteur (REng) est mémorisé sur un dispositif de commande de transmission (14) ou est déterminé pendant la conduite, par calcul d'un rapport de transmission de moteur (REng) à partir du régime de moteur (nEng) et d'un régime de sortie de transmission (nGear) transmis à l'arbre d'entraînement (15) .

13. Procédé selon l'une des revendications 9 à 12, **caractérisé en ce qu'**un régime de pompe (nPump) de la pompe hydraulique (2) est déterminé à partir du régime de moteur (nEng), et le débit volumique réel (QIst) est déterminé à partir du régime de pompe (nPump) par le biais d'une courbe caractéristique de pompe (K) associée à la pompe hydraulique (2).

14. Procédé selon la revendication 13, **caractérisé en ce que**, pour la détermination du régime de pompe (nPump) à partir du régime de moteur (nEng), un rapport de transmission de pompe (RPump) d'une transmission de pompe (9) disposée entre le moteur d'entraînement (10) et la pompe hydraulique (2) est pris en compte.

15. Procédé selon l'une des revendications précédentes, **caractérisé en ce que** le signal d'avertissement anticollision (SCW) est délivré par un dispositif de commande de frein de secours (20), le dispositif de commande de frein de secours (20) étant conçu pour délivrer le signal d'avertissement anticollision (SCW) s'il est établi qu'une collision avec un objet impliqué dans la collision (O) est imminente.

16. Procédé selon l'une des revendications précédentes, **caractérisé en ce que** la vérification pour déterminer si un débit volumique réel (QIst) qui est supérieur ou égal à un débit volumique minimal (QMin) est présent (St2), ainsi que l'augmentation du régime de moteur (nEng) (St3) sont commandées par un dispositif de servocommande (30) qui reçoit et délivre les signaux correspondants (SEng_out, SGear_out, SEng_in, SGear_out) par le biais d'une connexion par bus de données (12).

17. Procédé selon l'une des revendications précédentes, **caractérisé en ce que** le système de direction assistée hydraulique (200) assiste une demande de direction (ALenk) qui est prédéfinie manuellement par un volant de direction (1) ou qui est prédéfinie par un système de direction automatisé (300) par le biais d'un moteur électrique (302), une conversion mécanique de la demande de direction (ALenk) en un déplacement de direction de roues (5) étant assistée par le biais d'un mécanisme de direction (4) par le biais du liquide hydraulique (6) présentant le débit volumique réel (QIst) en particulier en cas d'assistance anticollision (A) (St8).

18. Procédé selon l'une des revendications précédentes, **caractérisé en ce qu'**une augmentation du régime de moteur (nEng) n'est pas couplée à une demande de direction (ALenk) .

19. Système de direction assistée hydraulique (200), en particulier approprié à la mise en œuvre du procédé selon l'une des revendications précédentes, comprenant au moins :
- une pompe hydraulique (2) servant à fournir un liquide hydraulique (6) présentant un débit volumique réel (QIst), dans lequel le débit volumique réel (QIst) est dépendant d'un régime (nPump) de la pompe hydraulique (2),
- un mécanisme de direction (4) relié à la pompe hydraulique (2) par le biais d'une conduite hydraulique (3), dans lequel le mécanisme de direction (4) convertit mécaniquement une demande de direction (ALenk) en un déplacement de direction de roues (5) du véhicule (100) et le mécanisme de direction (4) est conçu pour être assisté par le liquide hydraulique (6), et
- un dispositif de servocommande (30) servant à commander le système de direction assistée (200),
**caractérisé en ce**
**qu'**en outre un moteur d'entraînement (10) en liaison fonctionnelle mécanique avec la pompe hydraulique (2) ainsi qu'avec une transmission à changement de vitesses de véhicule (13), et un dispositif de servocommande (30) sont prévus, la transmission à changement de vitesses de véhicule (13) transmettant un régime de moteur (nEng) sélectionné par le moteur d'entraînement (10) à un arbre d'entraînement (15) du véhicule (100) par le biais d'un rapport de transmission de moteur (REng) pour l'entraînement de roues (5) du véhicule (100), et le régime (nPump) de la pompe hydraulique (2) étant dépendant du régime de moteur (nEng), et
le dispositif de servocommande (30) étant conçu, en cas d'assistance anticollision (A), pour régler le régime de pompe (nPump) de telle sorte qu'un débit volumique réel (QIst) soit prédéfini, lequel est supérieur ou égal au débit volumique minimal (QMin).

20. Système de direction assistée hydraulique (200) selon la revendication 19, **caractérisé en ce qu'**une transmission de pompe (9) est disposée entre le moteur d'entraînement (10) et la pompe hydraulique (20) pour définir un rapport de transmission de pompe (RPump).

21. Système de direction assistée hydraulique (200) selon la revendication 20, **caractérisé en ce que** le dispositif de servocommande (30) est conçu pour modifier le rapport de transmission de pompe (RPump) pour l'augmentation du régime de pompe (nPump), dans le cas où le débit volumique réel (QIst) est inférieur au débit volumique minimal (QMin) en cas d'assistance anticollision (A).

22. Système de direction assistée hydraulique (200) selon l'une des revendications 19 à 21, **caractérisé en ce que** le dispositif de servocommande (30) est conçu pour modifier le rapport de transmission de moteur (REng) par réduction de la vitesse de transmission de véhicule (GF) pour l'augmentation du régime de moteur (nEng), dans le cas où le débit volumique réel (QIst) est inférieur au débit volumique minimal (QMin) en cas d'assistance anticollision (A).

23. Système de direction assistée hydraulique (200) selon l'une des revendications 19 à 22, **caractérisé en ce que** le dispositif de servocommande (30) est conçu pour commander directement le moteur d'entraînement (10) par le biais d'un dispositif de commande de moteur (11) pour l'augmentation du régime de moteur (nEng), dans le cas où le débit volumique réel (QIst) est inférieur au débit volumique minimal (QMin) en cas d'assistance anticollision (A).

24. Véhicule (100), en particulier véhicule utilitaire (100), comprenant un système de direction assistée hydraulique (200) selon l'une des revendications 19 à 23, en particulier approprié à la mise en œuvre d'un procédé selon l'une des revendications 1 à 18, ainsi qu'un dispositif de commande de frein de secours (20) pour prédéfinir le signal d'avertissement anticollision (SCW).
